# EUROPÄISCHE PATENTSCHRIFT

(11) **EP 1 249 386 B1**
(45) Veröffentlichungstag und Bekanntmachung des Hinweises auf die Patenterteilung: **02.02.2005**
(21) Anmeldenummer: 02006323.6
(22) Anmeldetag: 21.03.2002
(51) Int. Cl.: B62J 27/00, B60R 21/16

(54) **Airbaganordnung**
Airbag arrangement
Dispositif d'airbag

(30) Priorität: 10.04.2001 DE 10117830
(43) Veröffentlichungstag der Anmeldung: 16.10.2002
(73) Patentinhaber: Bayerische Motoren Werke Aktiengesellschaft, 80809 München (DE)
(72) Erfinder: Seidl, Josef, 84130 Dingolfing (DE)

(56) Entgegenhaltungen:
- DE-A- 19 720 621
- DE-A- 19 720 622
- US-A- 6 082 759

## Beschreibung

Die Erfindung bezieht sich auf eine Airbaganordnung für ein Motorrad, wie sie im Oberbegriff des Hauptanspruchs beschrieben ist.

hat sich gezeigt, dass insbesondere bei Airbags für Motorräder der aufgeblasene Luftsack durch die Krafteinwirkung des auftreffenden Fahrerkörpers von der Gasgenerator-Einheit bzw. von dem Airbagmodul abreißen kann. Die DE 197 29 627 A1 zeigt eine Lösung für einen sicheren Halt. Der Luftsack wird hier über Befestigungselemente, wie Seile, Riemen oder flexible Streifen während des Entfättens und danach am Fahrzeugaufbau gehalten. Dabei ist das Airbagmodul vor einem Kraftstofftank in unmittelbarer Nähe der Lenkeinrichtung eines Motorrades angeordnet. Von dort führen die Befestigungselemente entlang des Kraftstofftanks zum Fahrzeugsitz, an dessen Unterseite sie verankert sind. Um ein gefälliges Erscheinungsbild zu erhalten, weist der Kraftstofftank an seiner Außenseite verschließbare Kanäle für die Befestigungselemente auf. Die Lösung wird damit aufwendig und kostspielig.

Eine weitere Lösung lässt sich aus der gattungsbildenden DE 197 20 622 A1 entnehmen. Bei dieser Ausführung sitzt das Airbagmodul gebremst verschiebbar in einer Gleitführung auf dem Kraftstofftank. Der Luftsack und der Gasgenerator sind in einem Modulgehäuse untergebracht, das nach außen hin mit zwei Öffnungsklappen oder Deckel verschlossen ist. Beim Zünden des Airbags stößt der Luftsack gegen die Öffnungsklappen, drückt sie auf und entfaltet sich schützend um den Oberkörper des Motorradfahrers. Bei geringer Krafteinwirkung verbleibt das Airbagmodul in der Gleitführung. Bei höherer Krafteinwirkung verschiebt sich das Airbagmodul nach vorne aus der Gleitführung .heraus und löst sich vom Motorrad. Ein solches Lösen des Airbags vom Motorrad ist aber nicht immer gewünscht, insbesondere dann nicht, wenn der Luftsack sich nur vor dem Fahrer entfaltet und ihn nicht - wie in der DE 197 20 622 A1 angestrebt - "umklammert".

Aufgabe der Erfindung ist es, eine gattungsgemäße Anordnung so auszubilden, dass der Luftsack in einfacher Weise auch während und nach seinem Entfalten am Fahrzeugaufbau verankert bleibt.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Die Erfindung weist demnach ein Modulgehäuse auf, in dem der nicht aktivierte Luftsack zusammengefaltet liegt. Die Austrittsöffnung für den Luftsack verschließen Abdeckelemente, an denen Teile des Luftsacks dauerhaft befestigt sind. Auch die Abdeckelemente sind in jedem Zustand stets mit dem am Fahrzeugaufbau festgelegten Modulgehäuse verbunden. Zündet der Airbag, werden die Abdeckelemente von dem sich entfaltenden Luftsack aufgestoßen und ermöglichen seinen Austritt. Die Verbindung seiner Wandabschnitte mit den Abdeckelementen bleibt jedoch erhalten, so dass zu jedem Zeitpunkt eine feste Verankerung über die Abdeckelemente und Modulgehäuse mit dem Fahrzeugaufbau gegeben ist.

Die Abdeckelemente und ihre Festlegung am Modulgehäuse können auf die verschiedenste Art und Weise ausgeführt sein. Es können ein, zwei oder mehr Deckel vorgesehen sein, die über flexible Bänder, Scharnier oder ähnlichem am Modulgehäuse schwenkbar gehalten sind.

Ebenso ist die Anordnung des Airbagmoduls am Motorrad in einem weiten Bereich frei wählbar. Es kann auf einem Kraftstofftank aufgesetzt oder hinter oder vor ihm angeordnet sein. Darüber hinaus kann es Teil einer Tankabdeckung oder eines auf dem Tank angeordneten Gepäckstückes sein.

Ganz allgemein werden mit der Erfindung die auftretenden Kräfte großflächig vom Airbag in die Abdeckung eingeleitet. Dabei ist eine gute Kraftaufnahme gewährleistet. Des Weiteren erlaubt die erfindurigsgemäße Anordnung eine kompakte Bauweise und lässt eine weitgehende Gestaltungsfreiheit zu.

Weitere Vorteile der Erfindung ergeben sich aus der nachfolgenden Beschreibung zweier Ausführungsbeispiele und anhand der dazugehörenden Zeichnung. Es zeigen
- **Figur 1**: eine Seitenansicht eines Motorrades mit einem durch einen Kreis gekennzeichneten Anbringungsort für einen Airbag,
- **Figur 2a, b**: im Schnitt ein erstes Ausführungsbeispiel einer erfindungsgemäßen Airbaganordnung an einem ersten Anbringungsort, einmal mit deaktivierter Airbageinheit und zum anderen mit aufgeblasenem Luftsack und
- **Figur 3a, b**: ein zweites Ausführungsbeispiel im Schnitt und an einem anderen Anbringungsort, wiederum im deaktivierten und aktivierten Zustand.

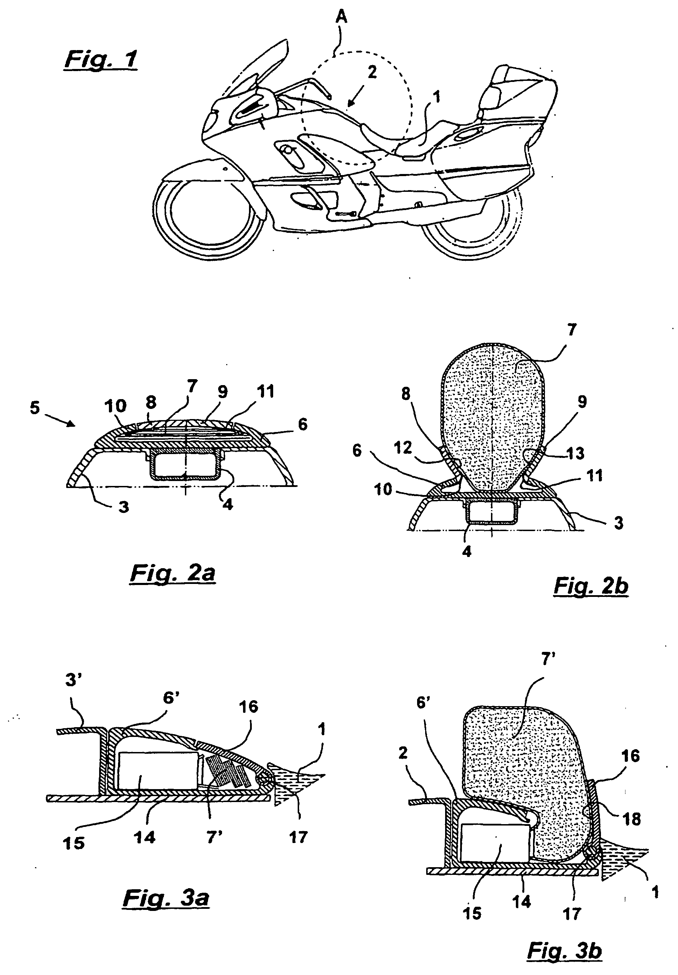

Bei dem in **Figur 1** gezeigten Motorrad handelt es sich insoweit um ein herkömmliches Motorrad mit einer Sitzbank 1 und einem davor (in Fahrtrichtung gesehen) angeordneten Kraftstofftank 2. Es sei an dieser Stelle angemerkt, dass der Kraftstofftank bei herkömmlichen Fahrzeugen hier angeordnet ist. Im Zusammenhang mit der vorliegenden Erfindung ist es aber unerheblich, ob dem bezeichneten Platz tatsächlich ein Tank oder sonstige aufbaufesten Teile oder mit dem Fahrzeugaufbau verbunden Ausrüstungs- oder Zubehörteile vorgesehen sind. Unabhängig davon deutet jedenfalls ein Kreis A den Bereich an, der als Anbringungsort für die nachfolgend beschriebenen Airbageinheiten dient.

Bei der ersten Ausführung nach **Figur 2a** sind lediglich die für das Verständnis der Erfindung wesentlichen Teile im Schnitt dargestellt. Dabei verläuft die Schnittebene quer zur Fahrzeuglängsrichtung. Es ist ein oberer Wandabschnitt 3 des Kraftstofftankes erkennbar, der an seiner Oberseite in einer Öffnung einen Modulträger 4 einer insgesamt mit 5 bezeichneten Airbageinheit aufnimmt. In dem Modulträger 4 befindet sich - nicht erkennbar - ein Gasgenerator. Über dem Modulträger und fest mit ihm verbunden, sitzt das eigentliche Airbagmodul. Es weist ein Modulgehäuse 6 mit einer Kammer auf, in der ein gefalteter Luftsack 7 liegt. Ebenfalls nicht dargestellt, führt eine Zuleitung ein vom Generator erzeugtes Gas zum Luftsack 7, um ihn beim Zünden des Airbags zu entfalten.

An seiner Oberseite weist das Modulgehäuse 6 eine Austrittsöffnung für den Luftsack 7 auf, die durch zwei symmetrische Deckel 8, 9 verschlossen ist. lm Mittenbereich stoßen die Deckelkanten gegeneinander, während ihre hiervon abgewandten Abschnitte über flexible Laschen 10, 11 mit der Innenseite des Modulgehäuses 6 verbunden sind. Schließlich sind Wandabschnitte des Luftsackes an den Innenseiten der Deckel 8 und 9 festgeklebt oder in ähnlicher Weise dauerhaft festgelegt; die Befestigungsstellen sind in Figur 2b mit den Bezugsziffern 12 und 13 belegt.

Beim Zünden des Airbags erzeugt der Gasgenerator innerhalb kürzester Zeit eine - wie bereits erwähnt - ausreichende Gasmenge, um den Luftsack 7 in der vorgesehenen Zeit aufzublasen. Beim Entfalten drückt der Luftsack 7 gegen die Deckel 8 und 9, sie werden aufgestoßen und öffnen sich zu den beiden Motorradseite hin quer zur Fahrtrichtung. Die Laschen 10 und 11 wirken dabei wie Scharniere und halten die Deckel auch im geöffneten Zustand an dem auf dem Kraftstofftank 3 verankerten Modulgehäuse.

Der vollentfaltete Luftsack 7 ist in **Figur 2b** dargestellt. Kräfte auf den Luftsack 7 durch den Aufprall eines (nicht gezeichneten) Fahrers werden über die Befestigungsabschnitte 12, 13 in die Deckel 8, 9 und von dort über die Laschen 10, 11 in das Modulgehäuse 6 und damit in das Fahrzeugweitergeleitet.

Die Ausführung nach **Figur 3a** unterscheidet sich von der nach **Figur 2a** insoweit, als dass die Airbageinheit nicht auf dem Kraftstofftank, sondern zwischen ihm und der Sitzbank angeordnet ist. Entsprechend zeigt **Figur 3a** einen Längsschnitt, das heißt, die Schnittebene verläuft parallel zur Längsachse des Motorrades bzw. zur Fahrtrichtung. Ein Modulgehäuse 6' fügt sich zwischen einen hinteren Wandabschnitt 3' des Kraftstofftanks 2 und der Sitzbank 1 ein. Es ist darüber hinaus an einem Abschnitt 14 eines nicht weiter dargestellten Fahrzeugrahmen festgelegt. Ein Gasgenerator 15 befindet sich - Gegensatz zur Ausführung nach Figur 2a - innerhalb des Modulgehäuses 6' und benachbart zur Tankwand 3'. Das Modulgehäuse 6' weist darüber hinaus vor dem Generator 15 ebenfalls eine Kammer für die Unterbringung des zusammengefalteten Luftsacks 7' auf. Ebenso ist eine Austrittsöffnung dieser Kammer durch ein Abdeckelement verschlossen, in diesem Fall durch einen Deckel 16. Ein Scharnier 17 mit einer quer zu Fahrtrichtung verlaufenden Schwenkachse hält den Deckel 16 am Modulgehäuse 6'. Schließlich sind wieder Teile des Luftsacks and der Innenseite des Deckel 16 festgelegt, siehe die mit Bezugsziffer 18 belegte Stelle in **Figur 3b.**

Ähnlich wie in **Figur 2b** wird der Luftsack 7' beim Auslösen des Airbags über den Gasgenerator 15 aufgeblasen. Er stößt den Deckel 16 auf, der zum Fahrzeugsitz 1 hin aufschwenkt und so den Weg freigibt für die vollständige Entfaltung des Luftsacks 7'. Eingeleitete Kräfte durch den aufprallenden Körper des Motorradfahrers werden wiederum über die Befestigungsstelle 18, Deckel 16, Scharnier 17 zum Modulgehäuse 6'und von dort über den Befestigungsabschnitt 14 in den Fahrzeugrahmen weitergeleitet.

## Patentansprüche

1. Airbaganordnung für ein Motorrad, bei der eine Airbageinheit (5) mit einem aufblasbaren Luftsack (7, 7') vor dem Motorradfahrer angeordnet und der Luftsack (7, 7') im aufgeblasenen Zustand gegenüber dem Fahrzeugaufbau festgelegt ist und im deaktivierten Zustand zusammengefaltet in einer Kammer eines am Fahrzeugaufbau befestigten Modulgehäuses (6, 6') liegt, wobei für den Austritt des sich entfaltenden Luftsacks (7, 7') wenigstens ein lösbarer, an dem Modulgehäuse (6, 6') dauerhaft verankerter Deckel (8, 9; 16) vorgesehen ist, dadurch gekenntzeichnet, dass Wandabschnitte des Luftsackes (7, 7') an dem Deckel (8, 9; 16) befestigt sind.

2. Anordnung nach Anspruch 1, **dadurch gekennzeichnet, dass** der Deckel (8, 9) über flexible Laschen (10, 11) mit dem Modulgehäuse (6) verbunden ist.

3. Anordnung nach Anspruch 1, **dadurch gekennzeichnet, dass** der Deckel (16) über ein Scharnier (17) schwenkbar mit dem Modulgehäuse (6') verbunden ist.

4. Anordnung nach einem der Ansprüche 1 bis 3, **dadurch gekennzeichnet, dass** ein vor dem Fahrer angeordneter Fahrzeugtank (2) an der Oberseite einer Tankwand (3) das Modulgehäuse (6) trägt, das nach oben hin mit zwei symmetrisch ausgebildeten Deckel (8, 9) verschlossen ist, an deren Innenseiten die Wandabschnitte des Luftsacks (7) befestigt sind, und dass sich die Deckel (8, 9) beim Entfalten des Luftsacks (7) zu den beiden Motorradseiten hin quer zur Fahrtrichtung öffnen.

5. Anordnung nach Anspruch 4, **dadurch gekennzeichnet, dass** die Deckel (8, 9) über flexible Laschen (10, 11) mit dem Modulgehäuse (6) verbunden sind.

6. Anordnung nach einem der Ansprüche 1 bis 3, **dadurch gekennzeichnet, dass** zwischen einem Fahrzeugsitz (1) und einem davor angeordneten Kraftstofftank (2) das Modulgehäuse (6') sitzt, das mit einem Deckel (16) verschlossen ist, wobei an der Innenseite des Deckels (16) Wandabschnitte des Luftsacks (7') befestigt sind und der Deckel (16) sich beim Entfalten des Luftsacks (7') zum Fahrzeugsitz (1) hin öffnet.

7. Anordnung nach Anspruch 6, **dadurch gekennzeichnet, dass** der Deckel (16) über ein Scharnier (17) mit einer quer zu Fahrtrichtung verlaufender Schwenkachse am Modulgehäuse (6') angelenkt ist.

## Claims

1. An airbag arrangement for a motorcycle wherein an airbag unit (5) comprising an inflatable airbag (7, 7') is disposed in front of the motorcycle driver and when inflated is fixed relative to the vehicle body whereas when inactivated it is folded up in a chamber of a module casing (6, 6') fastened to the vehicle body, wherein at least one releasable lid (8, 9; 16) permanently anchored to the module casing (6, 6') is provided for allowing the opening airbag (7, 7') to escape, **characterised in that** wall portions of the airbag (7, 7') are fastened to the lid (8, 9; 16).

2. An arrangement according to claim 1, **characterised in that** the lid (8, 9) is connected to the module casing (6) by flexible lugs (10, 11).

3. An arrangement according to claim 1, **characterised in that** the lid (16) is pivotably connected to the module casing (6') by a hinge (17).

4. An arrangement according to any of claims 1 to 3, **characterised in that** a tank (2) disposed in front of the driver bears the module casing (6) on the top of a tank wall (3) and the module casing is closed at the top by two symmetrically shaped lids (8, 9), the wall portions of the airbag (7) being fastened to the lids on the inside, and when the airbag (7) opens the lid (8, 9) opens on both sides of the motorcycle transversely of the direction of travel.

5. An arrangement according to claim 4, **characterised in that** the lids (8, 9) are connected to the module casing (6) via flexible lugs (10, 11).

6. An arrangement according to any of claims 1 to 3, **characterised in that** the module casing (6') is disposed between a vehicle seat (1) and a fuel tank (2) disposed in front of it and is closed by a lid (16), wherein wall portions of the airbag (7') are fastened to the inside of the lid (16) and the lid (16) opens towards the seat (1) when the airbag (7') expands.

7. An arrangement according to claim 6, **characterised in that** the lid (16) is pivotably connected to the module casing (6') via a hinge (17) which pivots around an axis extending transversely of the direction of travel.

## Revendications

1. Dispositif d'airbag pour une motocyclette, dans lequel une unité d'airbag (5) avec un sac à air gonflable (7, 7') est disposée devant le pilote de la motocyclette et le sac à air (7, 7') à l'état gonflé est fixé contre la structure du véhicule et à l'état désactivé est plié dans une chambre d'un boîtier de module (6, 6') fixé à la structure du véhicule, au moins un capot (8, 9 ; 16) détachable ancré durablement au boîtier de module (6, 6') étant prévu pour la sortie du sac à air (7, 7') se déployant,
**caractérisé en ce que**
des sections de paroi du sac à air (7, 7') sont fixées au capot (8, 9 ; 16).

2. Dispositif selon la revendication 1,
**caractérisé en ce que**
le capot (8, 9) est relié avec le boîtier de module (6) par des brides flexibles (10, 11).

3. Dispositif selon la revendication 1,
**caractérisé en ce que**
le capot (16) est relié avec le boîtier de module (6') de manière pivotante par une charnière (17).

4. Dispositif selon l'une des revendications 1 à 3,
**caractérisé en ce qu'**
un réservoir de véhicule (2) disposé devant le pilote porte sur la face supérieure une paroi de réservoir (3) du boîtier de module (6) fermé vers le haut avec deux capots (8, 9) configurés symétriquement, sur les faces internes desquels les sections de paroi du sac à air (7) sont fixées, et les capots (8, 9) s'ouvrent vers les deux côtés de la motocyclette perpendiculairement au sens de déplacement lors du déploiement du sac à air (7).

5. Dispositif selon la revendication 4,
**caractérisé en ce que**
les capots (8, 9) sont reliés avec le boîtier de module (6) par des brides flexibles (10, 11).

6. Dispositif selon une des revendications 1 à 3,
**caractérisé en ce qu'**
entre un siège de véhicule (1) et un réservoir de carburant (2) disposé devant se trouve le boîtier de module (6') fermé par un capot (16), des sections de paroi du sac à air (7') étant fixées à la face interne du capot (16) et le capot (16) s'ouvrant vers le siège de véhicule (1) lors du déplacement du sac à air (7').

7. Dispositif selon la revendication 6,
**caractérisé en ce que**
le capot (16) est articulé sur le boîtier de module (6') par une charnière (17) dotée d'un axe de pivotement courant perpendiculairement au sens de déplacement.
